Europäisches Patentamt

European Patent Office

Office européen des brevets

(19)

(11) Numéro de publication : **0 284 467 B1**

## (12) FASCICULE DE BREVET EUROPEEN

(45) Date de publication du fascicule du brevet :
**14.08.91 Bulletin 91/33**

(51) Int. Cl.⁵ : **B23K 11/00**

(21) Numéro de dépôt : **88400464.9**

(22) Date de dépôt : **29.02.88**

(54) **Dispositif de soudage par électrodes.**

(30) Priorité : **09.03.87 FR 8703178**

(43) Date de publication de la demande :
**28.09.88 Bulletin 88/39**

(45) Mention de la délivrance du brevet :
**14.08.91 Bulletin 91/33**

(84) Etats contractants désignés :
**DE GB IT**

(56) Documents cités :
**GB-A- 692 558**
**GB-A- 1 088 500**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Siegrist, Edmond**
**19, rue des Romains**
**F-68170 Rixheim (FR)**

(74) Mandataire : **Durand, Yves Armand Louis et al**
**Cabinet Z. Weinstein 20, Avenue de Friedland**
**F-75008 Paris (FR)**

EP 0 284 467 B1

## Description

La présente invention concerne un dispositif de soudage par électrodes.

On connaît déjà des dispositifs de soudage automatique de vis sur une pièce telle qu'une tôle, ces dispositifs comportant essentiellement un support sur lequel est fixé un vérin dont la tige porte une électrode susceptible de coulisser dans une tête de soudage en direction d'une contre-électrode fixe.

Dans ce genre de dispositif, la tête de soudage est située à une distance de quelques millimètres de la contre-électrode.

Dès lors, pour mettre en place la pièce ou la tôle devant recevoir la vis ou dégager celle-ci après le soudage, il est nécessaire de prévoir soit un dégagement de la tête de soudage soit un retrait de la contre-électrode, soit les deux à la fois.

Or, jusqu'à présent, on se contentait d'utiliser plusieurs vérins pour réaliser les opérations ci-dessus, et notamment un vérin pour effectuer le soudage et un vérin pour réaliser le dégagement de la tête de soudage ou le retrait de la contre-électrode. Comme on le comprend, ceci compliquait la structure de l'appareillage, le rendait coûteux, et augmentait les risques de défaut de fonctionnement.

On connaît par ailleurs d'après le document GB-A-692558, un dispositif de soudage du type décrit dans le préambule de la revendication 1, mais un tel dispositif est d'une conception mécanique quelque peu compliquée et son réglage ainsi que sa fiabilité de fonctionnement peuvent ne pas être toujours parfaits.

La présente invention a pour but de remédier à ces inconvénients en proposant un appareil considérablement simplifié par rapport aux appareils antérieurs et qui possède une excellente fiabilité de fonctionnement par le fait que le seul vérin portant l'électrode coulissant dans la tête de soudage suffit pour assurer le retrait de la tête de soudage, après l'opération de soudage.

A cet effet, l'invention a pour objet un dispositif de soudage par électrodes comprenant un support sur lequel est fixé un vérin dont la tige porte une électrode susceptible de coulisser dans une tête de soudage en direction d'une contre-électrodes fixe, des moyens de guidage par coulissement de la tête de soudage sur le support, des premiers moyens de butée solidaires des moyens de guidage et limitant la course, commandée par l'électrode, de la tête de soudage vers la contre-électrode, des seconds moyens de butée coopérant avec l'électrode pour provoquer le recul de la tête de soudage par rapport à la contre-électrode lors de la rétraction de ladite électrode par le vérin, et des moyens de rappel agencés entre l'électrode et la tête de soudage pour solliciter constamment cette dernière en direction de la contre-électrode, caractérisé en ce que :

— les moyens de rappel sont agencés entre la tête de soudage et une plaque transversale solidaire de l'électrode et susceptible de servir d'appui pour le second moyen de butée,

— les moyens de guidage sont constitués par plusieurs tiges coulissant dans le support, parallèles à l'électrode et portant les premier et second moyens de butée respectivement de part et d'autre dudit support,

— les tiges précitées sont fixées à une pièce portant la tête de soudage, tandis que la plaque transversale précitée, montée coulissante sur les tiges, est fixée sur un porte-électrode solidaire de la tige du vérin,

— les moyens de rappel précités sont constitués par des ressorts hélicoïdaux entourant les tiges précitées et comprimés entre la pièce portant la tête de soudage et la plaque transversale précitée,

— les premier et second moyens de butée sont constitués par des taquets fixés de manière réglable sur les tiges, et

— les tiges précitées coulissent dans des paliers solidaires du support qui entoure coaxialement le corps du vérin.

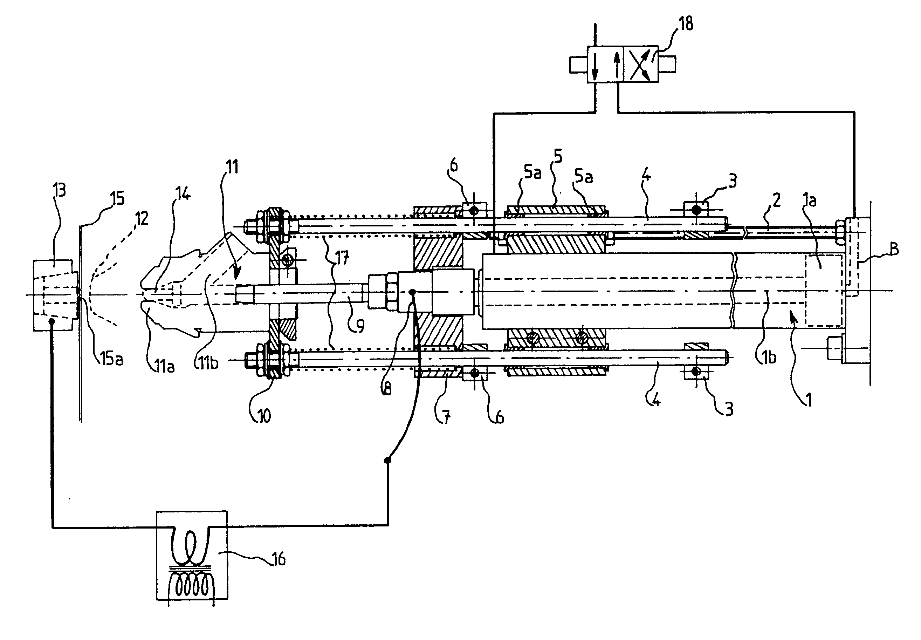

Mais d'autres caractéristiques et avantages de l'invention apparaîtront plus clairement dans la description détaillée qui suit et se réfère à la figure unique annexée donnée uniquement à titre d'exemple et illustrant, en coupe axiale, un dispositif de soudage conforme aux principes de l'invention.

On voit sur cette figure unique un dispositif de soudage par électrodes comprenant un support 5 sur lequel est fixé un vérin 1 comprenant une tige 1b actionnée par un piston 1a et portant une électrode 9 susceptible de coulisser dans une tête de soudage 11 en direction d'une contre-électrode fixe 13.

L'électrode 9 est raccordée à la tige 1b du vérin 1 par un porte-électrode 8, tandis que la tête de soudage 11 comporte, comme connu en soi, un mors 11a susceptible de retenir une vis 14 à souder sur une tôle 15. La tête 11 comporte également un conduit 11b permettant l'introduction de la vis 14 dans la tête 11. La tôle 15 comporte un trou 15a destiné à recevoir la vis à souder.

Conformémnent à l'invention, la tête de soudage 11 est solidaire de tiges parallèles 4 qui sont raccordées à la tête 11 par l'intermédiaire d'une pièce 10, et qui sont montées coulissantes dans le support 5 qui comporte à cet effet des paliers visibles en 5a.

Les tiges 4 portent, de part et d'autre du support 5, des butées 3 et 6. Ces butées revêtent avantageusement la forme de taquets qui sont fixés de manière réglable sur les tiges 4.

Une plaque transversale ou de poussée 7 solidaire du porte-électrode 8 est montée coulissante sur les tiges 4 de guidage de la tête de soudage 11.

On a montré en 17 des ressorts hélicoïdaux entourant les tiges de guidage 4 et qui sont comprimés entre la pièce 10 portant la tête de soudage 11 et la plaque transversale 7 qui est solidaire de l'électrode 9 la tête de soudage est ainsi constamment sollicitée en direction de la contre-électrode 13.

Le support 5, dans lequel coulissent les tiges 4, entoure coaxialement le corps du vérin 1 qui est fixé sur un bâti B. Un tirant ou analogue 2 relie le bâti B au support 5.

On a montré schématiquement en 16 un transformateur connecté de façon usuelle entre la contre-électrode fixe 13 et le porte-électrode 8.

Enfin, le piston 1a du vérin 1 à double effet est actionné par un circuit de fluide hydraulique comportant, comme connu en soi, une électrovanne de commutation 18.

Mais, pour une meilleure compréhension de l'invention, on expliquera ci-après le fonctionnement du dispositif décrit ci-dessus.

On partira de la position de repos visible sur la figure unique. C'est dire que, dans cette position, le piston 1a et la tête de soudage 11 se situent vers la droite de la figure.

Dans cette position, une vis 14 sera envoyée dans la tête 11 par le conduit 11b, et cela par soufflage, suivant une technique bien connue.

La détection de la présence de la vis 14 dans la tête 11 et de la présence de la tôle 15 autorise alors le déclenchement du cycle qui sera maintenant décrit.

L'électrovanne 18 est commutée par rapport à son état représenté. Il en résulte que le piston 1a du vérin sera poussé vers la gauche de la figure, de sorte que la tige 1b du piston et par conséquent le porte-électrode 8 et l'électrode 9 seront actionnés.

La plaque transversale 7 solidaire du porte-électrode 8 entraîne par l'intermédiaire des ressorts 17 l'ensemble constitué par la tête de soudage 11, la pièce-support de tête 10 et les tiges de guidage 4.

En d'autres termes, les organes 7, 8, 9, 10, 11 et 4 avancent ainsi ensemble jusqu'au point où les butées ou taquets 3 viennent en appui sur le support de guidage 5. Plus précisément, la course de la tête 11 est arrêtée à quelques millimètres de la tôle 15, comme matérialisé par des traits pointillés en 12. Tous les éléments solidaires de la tête, à savoir la pièce 10 et les tiges 4 sont bien entendu également arrêtés.

Il est à noter ici que la position de la tête 11 par rapport à la contre-électrode fixe 13 est réglable par déplacement des taquets 3 sur les tiges 4.

Lorsque la tête 11 est ainsi à l'arrêt, l'ensemble plaque transversale de poussée 7, porte-électrode 8 et électrode 9 continue à avancer, puisque la tige 1b du vérin 1 continue sa course vers la gauche de la figure. C'est dire que l'extrémité libre de l'électrode 9 vient en contact avec la vis 14 qui est poussée au travers des mors 11a de la tête dans le trou 15a de la tôle 15 et dans la contre-électrode 13.

Les ressorts 17 sont alors comprimés par la plaque 7, qui s'est écartée des taquets 6 immobiles avec les tiges 4.

Il en résulte que l'ensemble vis 14 — tôle 15 est serré entre l'électrode 9 et la contre-électrode 13 suivant un effort déterminé, de sorte que le soudage peut maintenant avoir lieu et il s'effectue bien sûr en alimentant le transformateur 16.

A la fin de l'opération de soudage, l'électrovanne 18 est commutée donc ramenée à son état représenté. Il en résulte que le piston 1a du vérin 1 sera actionné vers la droite de la figure, ce qui provoquera évidemment le recul de l'ensemble électrode 9 porte-électrode 8 et plaque transversale 7.

Ce recul provoquera la détente des ressorts 17 jusqu'à la mise en contact de la plaque 7 avec les butées ou taquets 6. La tige 1b du vérin 1 continuant sa course vers la droite de la figure, la plaque 7, en poussant sur les butées 6, provoquera alors le retrait de la tête de soudage 11 jusqu'à ce qu'elle reprenne la position de repos visible sur la figure, étant entendu que cette position de repos est elle aussi réglable par déplacement des butées 6 sur les tiges 4.

On a donc réalisé suivant l'invention un dispositif de soudage par électrodes qui est d'une conception mécanique particulièrement simple et fiable, qui permet de supprimer tous les éléments annexes existant dans les appareils antérieurs et pouvant constituer une source supplémentaire de défauts de fonctionnement.

## Revendications

1. Dispositif de soudage par électrodes comprenant un support (5) sur lequel est fixé un vérin (1) dont la tige (1b) porte une électrode (9) susceptible de coulisser dans une tête de soudage (11) en direction d'une contre-électrode fixe (13), des moyens de guidage (4) par coulissement de la tête de soudage (11) sur le support (5), des premiers moyens du butée (3) solidaires des moyens de guidage et limitant la course, commandée par l'électrode (9), de la tête (11) vers la contre-électrode (13), des seconds moyens de butée (6) coopérant avec l'électrode (9) pour provoquer le recul de la tête (11) par rapport à la contre-électrode (13) lors de la rétraction de l'électrode (9) par le vérin (1), et des moyens de rappel (17) agencés entre l'électrode (9) et la tête de soudage (11) pour solliciter constamment cette dernière en direction de la contre-électrode (13), caractérisé en ce que :

— les moyens de rappel (17) sont agencés entre la tête de soudage (11) et une plaque transversale (7) solidaire de l'électrode (9) et susceptible de servir d'appui pour les seconds moyens de butée (6),

— les moyens de guidage (4) sont constitués par plusieurs tiges coulissant dans le support (5), parallèles à l'électrode (9) et portant les premiers (3) et seconds moyens de butée (6) respectivement de part et d'autre dudit support,

— les tiges précitées (4) sont fixées à une pièce (10) portant la tête de soudage (11), tandis que la plaque transversale précitée (7), montée coulissante sur les tiges (4), est fixée sur un porte-électrode (8) solidaire de la tige (1b) du vérin,

— les moyens de rappel précités (17) sont constitués par des ressorts hélicoïdaux entourant les tiges (4) et comprimés entre la pièce (10) et la plaque transversale (7),

— les premiers et seconds moyens de butée (3, 6) sont constitués par des taquets fixés de manière réglable sur les tiges (4), et

— les tiges précitées (4) coulissent dans des paliers (5a) solidaires du support (5) qui entoure coaxialement le corps du vérin (1).

## Patentansprüche

1. Vorrichtung zum Schweissen mit Elektroden, mit einem Träger (5) an welchem ein Kraftzylinder (1) befestigt ist, dessen Stange (1b) eine in einem Schweisskopf (11) in Richtung auf eine ortsfeste Gegenelektrode (13) hin gleitbare Elektrode (9) trägt, Mitteln (4) zur Gleitführung des Schweisskopfes (11) an dem Träger (5), ersten mit den Führungsmitteln fest verbundenen und den durch die Elektrode (9) gesteuerten Bewegungsweg des Kopfes (11) zur Gegenelektrode (13) hin begrenzenden Anschlagmitteln (3), zweiten mit der Elektrode (9) zusammenwirkenden Anschlagmitteln (6), um die Rückwärtsbewegung des Kopfes (11) in Bezug auf die Gegenelektrode (13) bei dem Einziehen der Elektrode (9) durch den Kraftzylinder (1) zu veranlassen und zwischen der Elektrode (9) und dem Schweisskopf (11) angeordneten Rückstellmitteln (17), um diesen Schweisskopf ständig in Richtung auf die Gegenelektrode (13) hin zu beaufschlagen, dadurch gekennzeichnet, dass :

— die Rückstellmittel (17) zwischen dem Schweisskopf (11) und einer mit der Elektrode (9) fest verbundenen und als Abstützung für die zweiten Anschlagmittel (6) dienbaren Querplatte (7) angeordnet sind,

— die Führungsmittel (4) durch mehrere in dem Träger (5) gleitenden, mit der Elektrode (9) parallelen und die ersten und zweiten Anschlagmittel (3, 6) jeweils beiderseits des besagten Trägers tragenden Stangen gebildet sind,

— die vorgenannten Stangen (4) an einem den Schweisskopf (11) tragenden Teil (10) befestigt sind, während die gleitbar an den Stangen (4) angeordnete vorgenannte Querplatte (7) an einem mit der Stange (1b) des Kraftzylinders fest verbundenen Elektrodenhalter (8) befestigt ist,

— die vorgenannten Rückstellmittel (17) durch die Stangen (4) umgebenden und zwischen dem Teil (10) und der Querplatte (7) zusammengedrückten Wendelfedern gebildet sind,

— die ersten und zweiten Anschlagmittel (3, 6) aus in einstellbarerweise an den Stangen (4) befestigten Knaggen bestehen, und

— die vorgenannten Stangen (4) in mit dem den Körper des Kraftzylinders (1) koaxial umgebenden Träger (5) fest verbundenen Lagern (5a) gleiten.

## Claims

1. Device for welding with electrodes comprising a support (5) onto which is fastened a jack (1) the rod (1b) of which carries an electrode (9) susceptible of sliding in a welding head (11) towards a stationary counter-electrode (13), means (4) for guiding the welding head (11) through sliding on the support (5), first stop means (3) solid with the guide means and limiting the stroke, controlled by the electrode (9), of the head (11) towards the counter-electrode (13), second stop means (6) co-operating with the electrode (9) for causing the head (11) to move backwards with respect to the counter-electrode (13) upon the retracting of the electrode (9) by the jack (1), and return means (17) arranged between the electrode (9) and the welding head (11) for constantly urging the latter towards the counter-electrode (13), characterized in that :

— the return means (17) are arranged between the welding head (11) and a transverse plate (7) solid with the electrode (9) and susceptible of serving as an abutment for the second stop means (6),

— the guide means (4) are constituted by several rods sliding in the support (5), parallel to the electrode (9) and carrying the first and second stop means (3, 6) on either side of the said support, respectively,

— the aforesaid rods (4) are secured to a part (10) carrying the welding head (11) whereas the aforesaid transverse plate (7) slidably mounted on the rods (4) is fastened on an electrode-holder (8) solid with the rod (1b) of the jack,

— the aforesaid return means (17) are constituted by helical springs surrounding the rods (4) and compressed between the part (10) and the transverse plate (7),

— the first and second stop means (3, 6) are constituted by dogs fastened in an adjustable manner on the rods (4), and

— the aforesaid rods (4) are sliding in bearings (5a) solid with the support (5) which coaxially surrounds the body of the jack (1).